# EUROPEAN PATENT SPECIFICATION

(11) **EP 2 195 238 B1**
(45) Date of publication and mention of the grant of the patent: **31.08.2011**
(21) Application number: 08762516.6
(22) Date of filing: 26.06.2008
(51) Int. Cl.: B64D 15/12

(54) **ICE PROTECTION HEATER SYSTEM**
EISSCHUTZHEIZSYSTEM
SYSTÈME DE CHAUFFAGE DE PROTECTION CONTRE LA GLACE

(30) Priority: 26.06.2007 GB 0712398; 13.07.2007 GB 0713674
(43) Date of publication of application: 16.06.2010
(73) Proprietor: ULTRA ELECTRONICS LIMITED, Greenford, Middlesex UB6 8UE (GB)
(72) Inventor: STOTHERS, Ian, McGregor, Norfolk IP25 7ET (GB)
(74) Representative: Collins, John David
(86) International application number: PCT/GB2008/002230
(87) International publication number: WO 2009/001104

(56) References cited:
- EP-A- 0 459 216
- EP-A- 0 680 878
- EP-A- 1 541 467

## Description

The present invention relates to a heater system, a control system, a method of installing a heater system and a method of controlling a heater system.

Ice protection systems protect against the build-up of ice on structures. One common application of ice protection systems is on aircraft. During flight, the surfaces of an aircraft can be exposed to water vapour at low temperatures and, if no preventative action is taken, ice can quickly form on the wings, on control surfaces, and on other parts of the aircraft in such a way as to alter the aerodynamic performance of the aircraft (for example by altering the airflow around the aircraft and by adding additional weight to it) with potentially catastrophic consequences.

Electrothermal ice protection systems typically comprise a number of electrically-powered heater elements such as heater mats, which can be used as anti-icing zones in which a sufficient temperature is maintained at the surface of the wing in order to prevent the formation of ice. These heater mats can also be used as de-icing zones to shed ice that has been allowed to accrete on the protected region. The de-icing mats are cyclically energised in order to melt the interface between the wing and the accreted ice, causing the ice to be shed.

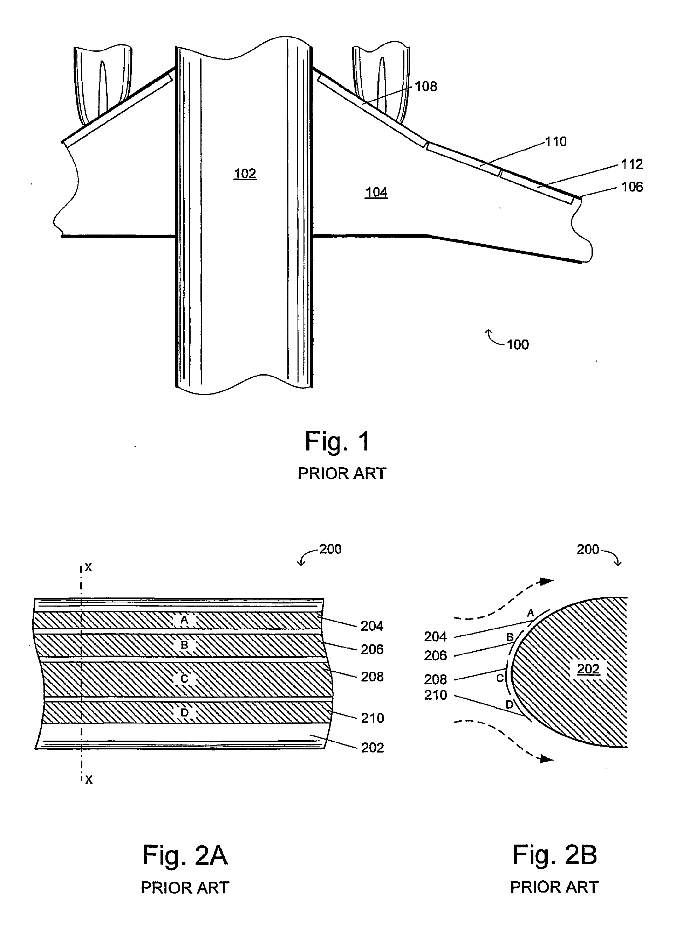

Figure 1 is an illustration of a portion of an aircraft, showing the placement of heater zones in a conventional electrothermal aircraft ice protection system. The aircraft 100 includes a fuselage portion 102 and a wing portion 104. On the leading edge 106 of the wing 104, where ice accumulates most quickly, a plurality of heating mat zones 108, 110, 112 are provided. The heater mats may either be bonded to the outer or inner surface of the wing leading edge, or may be made an integral part of the structure.

A portion 200 of one of the heater zones of Figure 1 is shown in Figure 2. On the wing section 202, shown head-on in Figure 2A and in cross-section in Figure 2B, four heater mat strips A 204, B 206, C 208, and D 210 are provided.

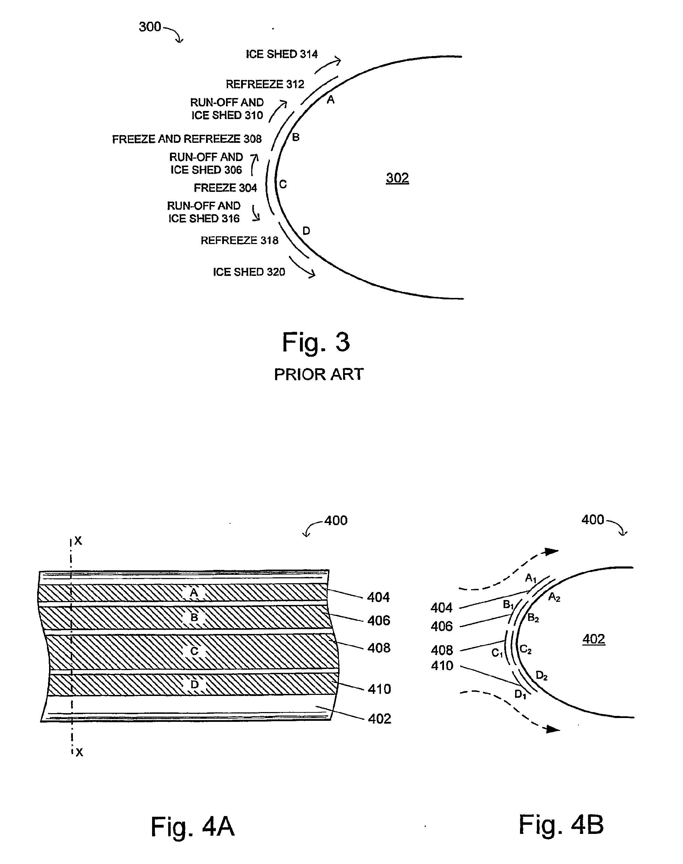

The operation of the four heater mat strips is illustrated in Figure 3. The portion of the heater zone 300 (shown in cross-section) includes a wing section 300 as before. In this example, all of the strips A, B, C and D are ice-breaking de-icer strips. During operation, ice accumulates 304 on the strip C at the stagnation zone of the wing. When the de-icing strip C is 'cycled', causing the bond between the ice and the wing to melt, some of the ice is shed and some of the water runs-off 306 up the wing surface, driven by the airflow over the wing. Some of the run-off water then freezes 308 in the cooler areas of the wing beyond the anti-icing strip C. Intermittently the de-icing strip B is cycled, again causing some ice to be shed 308, but also some remaining water to run back 310 to further parts of the wing to refreeze again 312. De-icing strip A is also cycled, causing most of the remaining water to be shed as ice 314 or to be carried off the wing or evaporated by the airflow. A similar process of run-off 316, re-freezing 318 and ice shedding 320 takes place on the lower portion of the wing.

Such ice protection systems have some drawbacks. If any one of the heater strips A, B, C or D fail, the ice protection system may be rendered ineffective. A single failed heater strip could leave the entire wing exposed to ice accretion, for example. In this case, the build up of ice would be expected to change the aerodynamic performance of the wing and to cause large unbalanced moments to be exerted on the aircraft (due to the differing drag and lift of each of the wings). Aircraft control surfaces (such as the ailerons and rudder, for example) can compensate for these changes to some degree but, with ice continuing to accrete, the control surfaces will eventually be overcome and a catastrophic failure of the aircraft is to be expected.

It is therefore desired to provide some redundancy against failure. One approach is to provide a backup version of each heater mat. Figure 4 is an illustration of such a redundant heater mat arrangement 400 that could be provided, in which each of the heater mat strips of Figure 2 have been duplicated. The wing portion 402, shown front-on in Figure 4A and in cross-section in Figure 4B, includes eight heater mat strips A₁ and A₂ 404, B₁ and B₂ 406, C₁ and C₂ 408, and D₁ and D₂ 410. In the event of a failure of one of the primary heater mats A₁, B₁, C₁, D₁, the appropriate one of the backup heater mats A₂, B₂, C₂, D₂ could commence operation.

A problem with this system, however, is that overlaying the mats may not provide adequate protection, because a fault in a mat may affect the corresponding redundant mat. Also, any external fault caused by impact would also probably affect both mats. Another approach is therefore required, that assumes that a failure of at least one heater zone during normal operation should be accounted for.

Other de-icing solutions may be found, for example, in EP0680878, EP0459216 and EP 1541467.

In a first aspect, the present invention provides a control system for a structure (which may be a fixed structure, or a land, air or sea-based vehicle, for example), the ice protection system comprising: a plurality of independently controllable heater elements (which may be heater mats, engine air bleed channels, or any other appropriate heater device) arranged on the structure; and a control system, operable: to detect an underperformance of at least one underperforming heater element; and to control the supply of power to at least one further heater element in dependence on a stored relationship or algorithm relating said at least one further heater element to said at least one underperforming heater element.

Thus, in the event of a heater element failure, the power supply to one or more further heater elements is altered in order to reduce the impact of the failure. A number of different choices of further heater element(s) can be made in dependence on one or more variables that are sought to be controlled. The stored relationship may be, for example, a look-up table storing for each heater element an identifier of a further heater element (or elements) to be adjusted in the event of the heater element underperforming. An algorithm could be used which takes an identifier associated with an underperforming heater element as an input and gives as an output an identifier associated with the further heater element(s). The ice protection system may be designed such that the relevant identifiers have a simple mathematical relationship, for example. The underperforming may be a full or partial failure of the heater element or associated power supply, for example.

If the structure has a desired aerodynamic performance, the control system may be operable to control the supply of power to said at least one further heater element in order to counteract a change in aerodynamic performance caused by said at least one underperforming heater element. The term 'aerodynamic performance' preferably refers to the general behaviour of the structure in an airflow, and is not intended to be especially limiting. A desired aerodynamic performance may relate to a desired relationship between an applied airflow (due to prevailing winds or arising from the movement of the structure, for example) and mechanical stresses, moments or forces applied to the structure, for example. It may be desired, for example, to minimise external moments about particular axes, or total drag, or total lift.

In an embodiment in which the structure has an axis of symmetry, a position of said at least one further heater element may be substantially the reflection of a position of said at least one underperforming heater element about the axis of symmetry. This can be effective in cancelling out the effect of one or more underperforming heater elements, especially if the axis of symmetry is substantially aligned with an average or prevailing direction of air flow relative to the structure.

The control system may be operable to reduce the supply of power to said at least one further heater element (and may disconnect the supply of power entirely, for example). The control system may also reduce (or disconnect) the power to the original heater element, for example to ensure that both the underperforming and further heater elements are outputting a consistent and reliable amount of power (which may be zero). In more detail, the control system may be operable to cease the supply of power to the heater elements by disconnecting them from a power supply, for example by operating switches or by physically breaking the power supply connection (permanently, for example). In the case of a permanent disconnection, there is no risk of either the failed heater element or further heater element(s) coming back on line and upsetting the aerodynamic equilibrium again.

The heater elements may be sized such that the structure can remain substantially operational despite a failure of at least two of the heater elements. If the size of the elements is reduced further, the structure will be able to remain substantially operational despite multiple heater element failures.

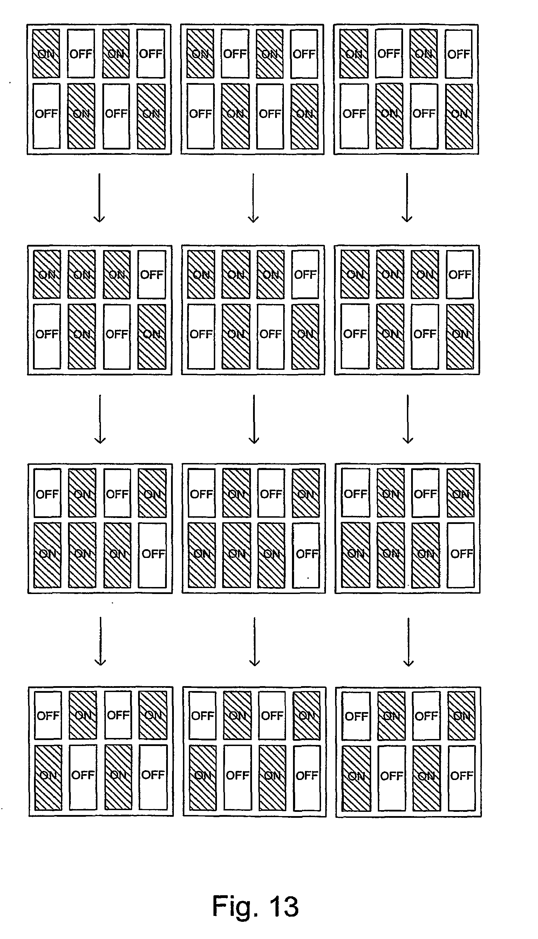

In one embodiment, the control system may be operable to switch the heater elements on and off so as to produce a travelling wave for transferring ice across a surface. The wave may travel in a preferred direction that may or may not be aligned with the direction of airflow (in use). The invention may encompass a method and apparatus for controlling an ice protection system substantially as described herein with reference to Figure 13, and any obvious variants. This can improve the ice shedding performance.

The control system may comprise a plurality of controllers, each controller being operable to control at least one of the heater elements. The heater elements may be grouped into a plurality of groups, and each controller may be operable to control at least one group. In one embodiment, at least one group of heater elements is operable to be controlled by more than one of the controllers. This can provide increased redundancy in the event of a controller failure.

The heater elements may be arranged substantially perpendicular to the leading edge of an aerodynamic member (such as the leading edge of a wing). Alternatively, the heater elements may be arranged substantially diagonally in relation to the leading edge of an aerodynamic member (such as the wing leading edge again). The ice protection system may comprise at least one breaker strip, and may comprise at least one stagnation zone heating mat.

In another aspect the invention provides an aircraft (such as an aeroplane or a helicopter) including an ice protection system as aforesaid.

In further aspects, the invention provides an ice protection system.

In a yet further aspect of the invention, there is provided a method of controlling an ice protection system for a structure, the ice protection system including a plurality of independently controllable heater elements, and the method comprising: detecting an underperformance of at least one underperforming heater element; and controlling the supply of power to at least one further heater element in dependence on a stored relationship or algorithm relating said at least one further heater element to said at least one underperforming heater element.

In a further aspect of the invention there is provided a method of installing an ice protection system for a structure having a desired aerodynamic performance, the method comprising: arranging a plurality of independently controllable heater elements on the structure; and installing a control system, operable: to detect an underperformance of at least one underperforming heater element; and to control the supply of power to at least one further heater element in dependence on a stored relationship or algorithm relating said at least one further heater element to said at least one underperforming heater element.. Other method features may be provided corresponding to the apparatus features mentioned above.

In another aspect of the invention there is provided a method of installing an ice protection system for a structure having an axis of symmetry, the method comprising: arranging a plurality of independently controllable heater elements on either side of the axis of symmetry; and installing a control system, operable: to detect a failure associated with one of the heater elements; and to cease the supply of power to both to the failed heater element and also to a heater element having a position that is substantially the reflection of the position of the failed heater element about the axis of symmetry. As before, further method features may be provided corresponding to the apparatus features mentioned above.

In a further aspect of the invention there is provided a method of designing an ice protection system for a structure, comprising: determining a portion of the structure to which ice protection heating is to be provided during use of the structure; determining an extent to which the ice protection heating can fail before the structure will experience operational failure; and designing an arrangement of independently controllable heater elements that are sufficiently small that the failure of any heater element will not cause a failure beyond the determined extent.

The method may further comprise subjecting at least the portion of the structure to icing conditions that may be expected during use of the structure; providing ice protection heating to only part of the determined portion of the structure; and measuring the amount of ice accretion on the structure in order to determine the extent to which the ice protection heating can fail. Alternatively, the method may further comprise modelling the amount of ice accretion on the structure in order to determine the extent to which the ice protection heating can fail. The step of designing the ice protection heater system may further comprise designing an arrangement of heater elements in which heater elements are arranged on either side of an axis of symmetry of the structure. A control system as aforesaid may be incorporated into the design. The method may further comprise installing at least part of the ice protection system (such as the control system) in a structure.

In a further aspect, the invention provides an ice protection system for a structure having at least one aerodynamic member, wherein the ice protection system comprises a plurality of heater elements arranged substantially diagonally in relation to the leading edge of said at least one aerodynamic member. The diagonal arrangement can reduce the incidence of 'bridging' between heater elements (because the gap between adjacent heater elements can be smaller in the direction of airflow than in other arrangements) and the redundancy of the system can be improved (because in the event of a heater element failure, ice protection heating can still be provided along the entire width of the ice protection heater area).

In a yet further aspect, the invention provides an ice protection system for a structure having at least one aerodynamic member, wherein the ice protection system comprises a plurality of heater elements arranged in a matrix divided both substantially in line with and substantially perpendicular to the leading edge of said at least one aerodynamic member. This can improve the redundancy of the heater mat system and also increase the flexibility of the system with regard to power cycling patterns (which can cause ice to be shedded more effectively). Other arrangements are of course possible.

The present invention can be implemented in any convenient form, for example using dedicated hardware, or a mixture of dedicated hardware and software. The invention may further comprise a data network (for example to enable communications between the control system and other parts of the structure), which can include any local area network or other appropriate network. Aspects of the present invention encompass computer software implementable on a programmable device. The computer software can be provided to the programmable device using any conventional carrier medium. The carrier medium can comprise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid-state memory device.

Embodiments of the present invention will now be described with reference to the accompanying drawings, in which:
Figure 1 is an illustration of the placement of heater mats and heater zones of an ice protection system of an aircraft;
Figure 2A and 2B are an illustration of a portion 200 of one of the heater zones of Figure 1;
Figure 3 is an illustration of the operation of the four heater mat strips of Figure 2;
Figures 4A and 5B are an illustration of one redundant heater mat arrangement;
Figures 5A and 5B are an illustration of a redundant heater mat arrangement of a first embodiment;
Figures 6A and 6B are an illustration of a redundant heater mat arrangement of a second embodiment;
Figure 7 is an illustration of an arrangement of the heater mats of Figures 5A and 5B;
Figure 8 is a schematic of a control system for controlling the heater mats of Figure 7;
Figure 9 is a simplified example of heater mat placements on an aircraft;
Figure 10 is an illustration of the effect of a heater mat failure in the system of Figure 9;
Figure 11 is an illustration of the effect of a disconnection of a further heater mat in the system of Figure 10;
Figures 12A, 12B, 12C and 12D are illustrations of different embodiments of a control system for controlling the system of Figures 9 to 11;
Figure 13 is an illustration of a heater mat cycling schedule for operating the heater mats of Figures 5A and 5B;
Figure 14 is an illustration of a redundant heater mat arrangement of a third embodiment; and
Figure 15 is an illustration of a redundant heater mat arrangement of a fourth embodiment.

Two embodiments of a redundant heater mat arrangement will first be described. A control system for controlling the heater mats and associated control systems will then be described. Further, non-exhaustive examples of redundant heater mat arrangements will then be given.

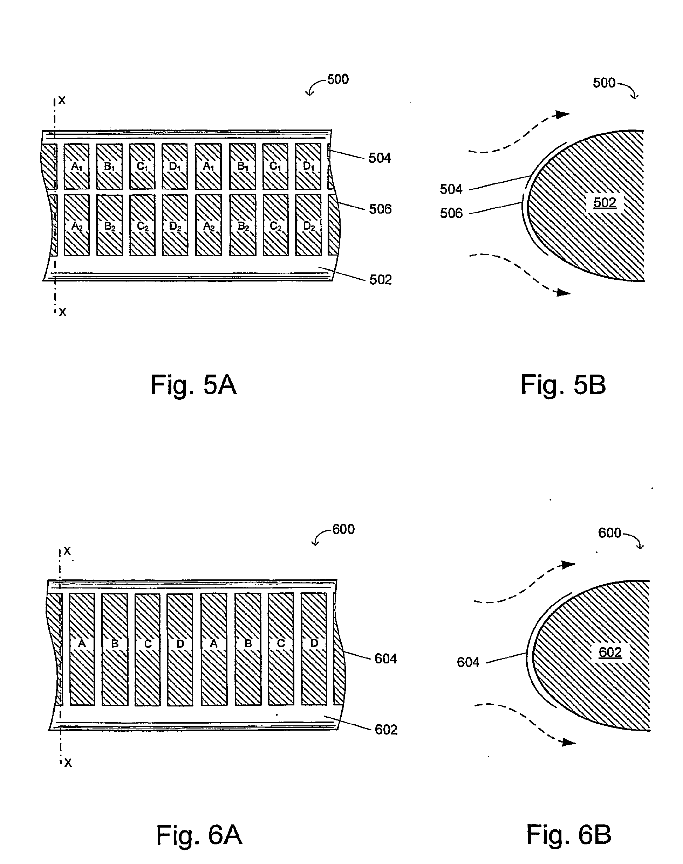

Figures 5A and 5B are an illustration of a redundant heater mat arrangement of a first embodiment. The arrangement 500 is shown in a front view in Figure 5A and in cross-section in Figure 5B. The wing section 502 is covered by a first row 504 and a second row 506 of de-icing strips. The strips are divided lengthwise (that is, divided along the length of the leading edge of the wing) and also chordwise (that is, divided along a line extending from the leading edge to the trailing edge of the wing).

Figures 6A and 6B are an illustration of a redundant heater mat arrangement of a second embodiment. The arrangement 600 is shown in a front view in Figure 6A and in cross-section in Figure 6B. The wing section 602 is covered by a single row 604 of de-icing strips. The strips are divided lengthwise (that is, divided along the length of the leading edge of the wing).

Figures 5 and 6 schematically illustrate embodiments of a heater mat arrangement in which heating mats are split chordwise or lengthwise in order to provide redundancy and some robustness against certain types of damage (such as a limited external impact, for example).

As noted, in the first embodiment (Figure 5) the mats are both split chordwise and lengthwise and in the second embodiment (Figure 6) the mats are split lengthwise only. The lengthwise division may be a division by a line essentially transverse to a stagnation zone of the wing. The chordwise division may be division by a line essentially parallel to a stagnation zone of the wing.

In the embodiments shown in Figures 5 and 6, each mat is separately controllable, allowing a high degree of redundancy in the event that a single mat fails. The number of mats may be limited by the control system and available switches but otherwise there may be no theoretical upper limit on the number of mats.

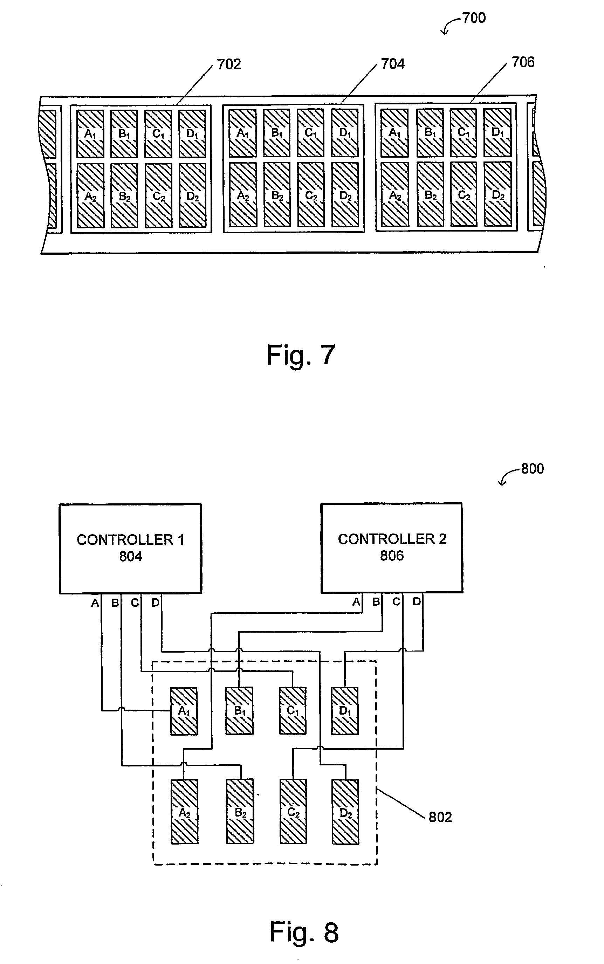

Figure 7 is an illustration of an arrangement of the heater mats of Figures 5A and 5B. The arrangement 700 of mats includes a plurality of groups 702, 704, 706 of mats. Each group of mats 702, 704, 706 is independently controlled and powered. The modular arrangement can increase the ease of installation of the mats as well as provide redundancy. Yet further redundancy can be provided, as explained below.

Figure 8 is a schematic of a control system for controlling the heater mats of Figure 7. The control system 800 includes a heater mat group 802, a first controller 804 and a second controller 806.

The first controller 804 controls mats B₁, D₁, A₂ and C₂, and the second controller 806 controls mats A₁, C₁, B₂ and D₂.

The two controllers 804, 806 provide further redundancy, because the heater mat size can be chosen such that the failure of a controller (equivalent to a loss of four heater mats) will not lead to a serious failure of the ice protection system. The control can of course be divided between a larger number of controllers (for example, to reduce the number of mats controlled by a single controller to below the critical number required for a major ice protection failure).

The controllers 804, 806 synchronise by appropriate means (using an external clock or network signal, or by communications with each other or with a central ice protection controller, for example) so that the heater mats are synchronised in a coordinated fashion.

Timing sequences can be chosen such that the controllers 804, 806 are alternately operating. For example one sequence for de-icing or carrying out an anti-icing startup procedure is to power diagonal mats in sequence (energising mats A₂ and B₁, then mats B₂ and C₁, and so on). Alternatively, timing sequences and/or the allocation of heater mats to controllers can be such that both controllers are both continuously engaged (which can simplify the power distribution, for example). Other timing sequences are of course possible.

At the changeover between heater mat D₂ of the first heater group 702 of Figure 7 being powered, and heater mat A₁ of the second heater group 704 of Figure 7 being powered, for example, bridging by ice may occur.

Breaker strips could also be employed between surfaces to remove bridges. A stagnation zone heater mat could also be utilised if required. The zones could be broken down into 12 rather than 8 zones for 3 phase applications, in order to minimise the required number of switches, for example.

Other embodiments of the control system (which may share features with, and be compatible with, the scheme shown in Figure 8) will now be described.

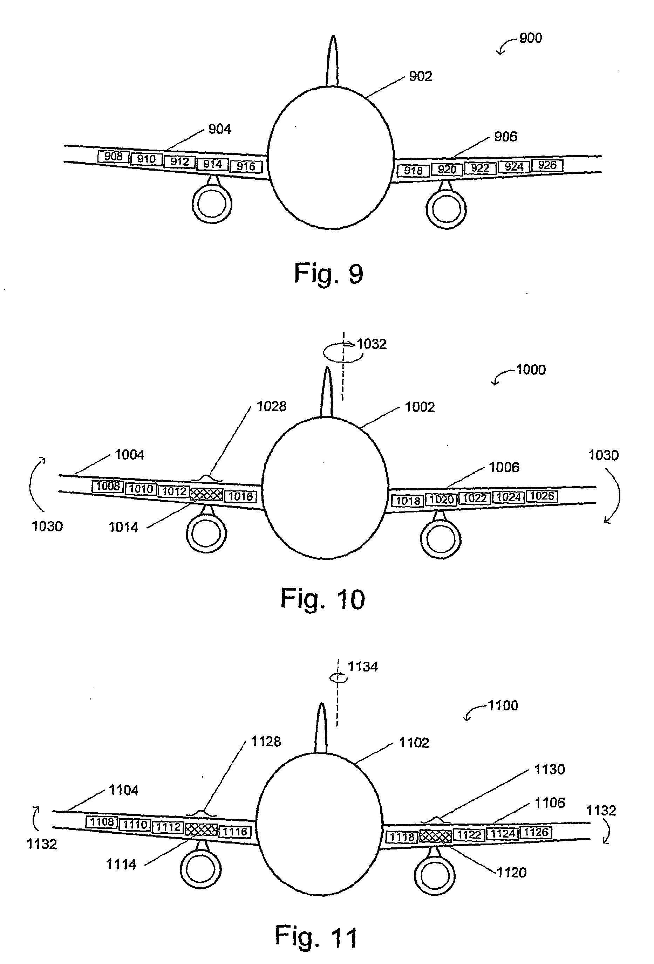

Figure 9 is a simplified example of heater mat placements on an aircraft 900. The fuselage 902, right wing 904 (as view from the rear of the aircraft) and left wing 906 are shown in diagrammatic form. The right wing 904 is provided with heater mats 908, 910, 912, 914, 916, and the left wing 906 is provided with heater mats 918, 920, 922, 924, 926. (In most applications, a greater number of heater elements would be provided, but in this example the number of heater elements is kept small for convenience and simplicity.)

Figure 10 is an illustration of the effect of a heater mat failure in the system of Figure 9. Again, the aircraft 1000 includes a fuselage 1002, right wing 1004 and left wing 1006. The right wing 1004 includes heater elements 1008, 1010, 1012, 1014, 1016 and the left wing 1006 includes heater elements 1018, 1020, 1022, 1024, 1026.

A failure of the heater mat 1014 is indicated by cross-hatching. A corresponding build-up of ice 1028 is shown, caused by the lack of heating in the region of the heater mat 1014. As a result of the build-up of ice 1028, the aerodynamic performance of the wing 1004 is changed. For example, the wing may have increased lift (due to the airflow over the wing becoming more turbulent) and also increased drag, applying a banking moment 1030 and a yawing moment 1032. Unless counteracted by movements of the aileron and rudder control surfaces (not shown), the moments 1030, 1032 would in effect pull the aircraft nose away from the direction of travel and cause the aircraft to bank to the left (for example). If ice continues to accrete on the wing, the moments 1030, 1032 may become too strong to be counteracted by adjustments to the control surfaces, and a catastrophic failure of the aircraft could be expected. Alternatively, the accretion of ice could cause a reduction in the amount of lift, also potentially causing a catastrophic failure of the aircraft (for analogous reasons).

In the present embodiment, the ice protection control system detects the failure of a heater mat and, as will now be described, carries out a disconnection of another heater mat in order to attempt to counteract the problems mentioned above.

Figure 11 is an illustration of the effect of a disconnection of a further heater mat in the system of Figure 10.

Again the aircraft 1100 is shown with fuselage 1102, right wing 1104, left wing 1106 and heater elements 1180, 1110, 1112, 1114, 1116, 1118, 1120, 1122, 1124, 1126. In this instance, having detected the failure of heater element 1114, the ice protection control system (not shown) forces the disconnection of the heater element in the corresponding position on the opposite side of the aircraft, namely element 1120. As a result of the failure and disconnection, two areas 1128, 1130 of ice accrete on the wings.

Because ice may accrete differently over the two areas 1128, 1130, there may still be an imbalance between the aerodynamic properties of the wings, causing a banking moment 1132 and a yawing moment 1134, but the imbalance will be kept relatively low and manageable by manipulation of control surfaces.

In the event of any further heater mat failures, the same process can be followed. Again, some imbalance may be expected, but not generally any further imbalance than might be expected with one failed heater element.

The number of heater mat failures that can occur is largely determined by the amount of ice that will accrete (and where it will accrete) due to each failed heater mat. This is largely determined by the size of the heater mat. Therefore the individually controlled (disconnectable) heater elements must be made sufficiently small that the loss of 2 × *n* heater mats will not cause operational failure of the aircraft (that is, will not cause sufficient ice to accumulate to overcome the pilot's ability to compensate for the change in aerodynamic properties), where *n* is the number of heater mat failures that will be tolerated during normal operation.

In an alternative embodiment, without the symmetric disconnection control system, the same design process can be followed in which the individually controlled (disconnectable) heater elements are made sufficiently small that the loss of *n* heater mats will not cause operational failure of the aircraft, where again *n* is the number of heater mat failures that will be tolerated during normal operation.

The arrangement of the heater mats can be designed to minimise the aerodynamic effect of ice accreting on the surface when one or more heater mat elements fail. A matrix of individually controllable heater elements divided both substantially in line with and substantially perpendicular to the leading edge of an aerodynamic member is one such arrangement.

The determination of the maximum heater size can be made by wind tunnel testing of a wing section (or other part of the structure that is to be actively protected from ice accumulation) and measuring how much ice accretes when parts of the ice protection heating are switched off, for example. The aerodynamic effects of the ice accretion can be measured or simulated to determine the limits of safe operation. Other methods, including simulation of the ice accretion process, are also possible.

The heater element control system will now be described in more detail.

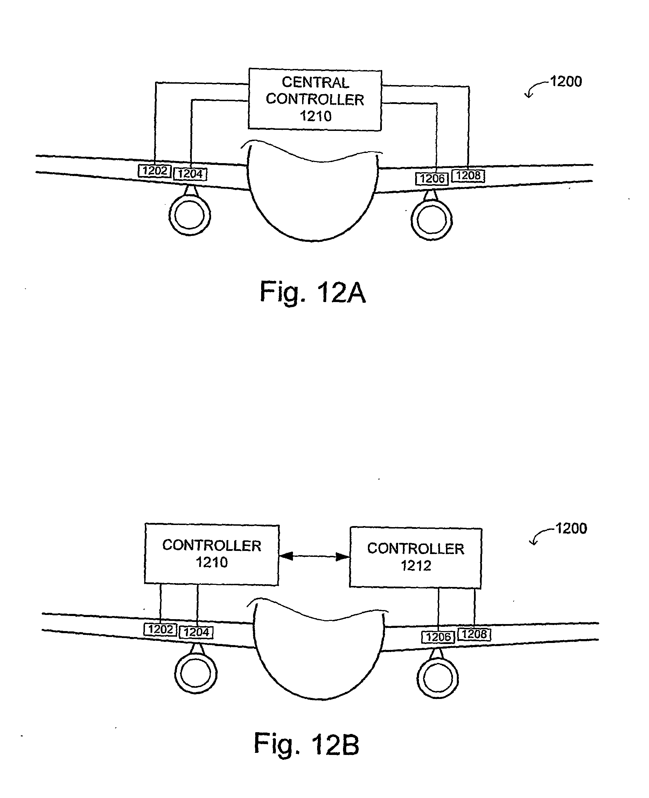

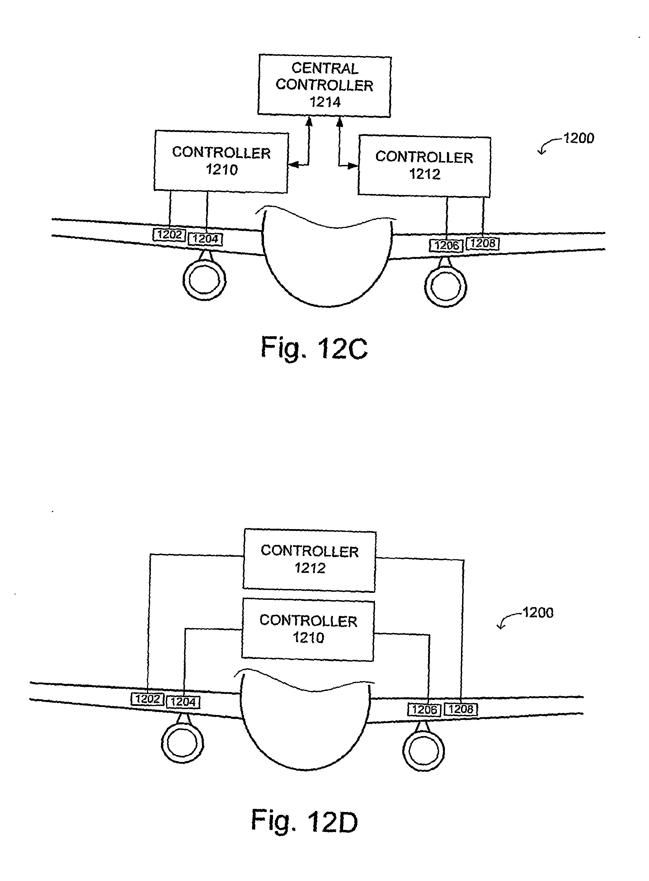

Figures 12A, 12B, 12C and 12D are illustrations of different arrangements of a control system for controlling the system of Figures 9 to 11. In these figures a portion of the aircraft 1200 is shown diagrammatically, including (for illustration) a couple of heater elements 1202, 1204 and symmetric partner ('mirror image') heater elements 1206, 1208.

In the embodiment of Figure 12A, a central controller 1210 controls the supply of power to all of the ice protection heater elements, including the heaters elements 1202, 1204, 1206, 1208, and also monitors the status of the elements. In the event of a failure of a heater such as heater 1202, the controller 1210 detects the failure by an appropriate means (see below) and ensures that both a failed heater element 1202 (for example) and the corresponding 'mirror image' heater element 1208 are disconnected. The control system of this embodiment can minimise the amount of wiring and control circuitry that is required.

The determination of which heater element to disconnect can be made using a look-up table having an entry for each heater element (for example). Each entry in the table contains an identifier of a corresponding (symmetric pair) heater element that should be disconnected if the indexed heater element fails. Alternatively, each heater element may have an identifier that can be mapped algorithmically to a corresponding identifier of a symmetrically opposed heater element. For example, if the heater elements are allocated an identifier number between 0 and 7 (say), going from left to right across both wings, the mirror image heater element can be determined by subtracting the identifier from 7 (so the mirror image of element 0 is element 7, the mirror image of element 1 is element 6, and so on). Other referencing schemes are of course possible.

In the embodiment of Figure 12B, a number of controllers 1210, 1212 are provided, each being responsible for a group of heater elements. In particular, controller 1210 controls the heater elements 1202, 1204 and controller 1212 controls the 'mirror image' heater elements 1206, 1208. Additional controllers may of course be provided. Again the controllers 1210, 1212 both control and monitor the heater elements, and have appropriate connections (such as a serial data network) to allow communication between the controllers.

In the event of a heater element failure, for example the failure of heater element 1202, the relevant controller 1210 ensures that the heater element 1202 is disconnected, and instructs the other controller 1212 to disconnect the corresponding symmetric heater element 1208.

In a variant of this embodiment, one controller 1210 monitors the heater elements 1206, 1208 of the symmetric partner controller 1212 as well as, or instead of, monitoring its own associated heater elements 1202, 1204. Additionally or alternatively, the controller 1210 can monitor the performance of the other controller 1212 (from which it can infer whether or not the associated heater elements 1206, 1208 are being correctly switched). In the event of a failure being detected, either of the controller 1212 or of the associated heater elements 1206, 1208, the controller 1210 can both cause the relevant heater element(s) 1206, 1208 to be disconnected and also its own heater element(s) 1202, 1204. This system requires a larger number of controllers and additional wiring, but can provide additional protection in the event of a controller-level failure.

In this way or otherwise, it is possible for each heater element 1202, 1204, 1206, 1208 to be independently controlled by more than one controller, thus increasing redundancy.

In the embodiment of Figure 12C, a first controller 1210 and second controller 1212 are again provided, but a further central controller 1214 is provided. In this embodiment, some fault detection functionality is delegated to the central controller 1214, which coordinates with the local controllers 1210, 1212 if any heater elements 1202, 1204, 1206, 1208 are required to be disconnected in the event of a failure elsewhere.

In the embodiment of Figure 12D, two controllers 1210, 1212 are again provided. A central controller (not shown) may also be provided, as described above. In this embodiment, each controller 1210, 1212 controls a number of symmetric heater element pairs. Thus, in the event of a controller failure, no asymmetry will arise as a result of the corresponding heater element failures. In practice there may be impracticalities in providing a sufficiently large amount of cross-wiring between the different wings.

Further redundancy may be provided in addition to that described above in relation to Figures 12A to 12D, for example by providing backup versions of each controller. For example, three versions of each controller may be provided, and the controller output may be decided by a majority voting scheme. Alternatively, backup controllers may remain dormant until a failure is detected in the currently operating controller. Other appropriate redundancy schemes may be used.

The detection of a heater element failure may be made by any appropriate means. For example, a failure may be detected directly, by temperature measurement, or inferred by current, power, resistance and/or voltage measurements taken in relation to indididual heater elements.

The heater elements can be disconnected when desired for example by operating a suitable electronic or mechanical switch, or by causing the heater element connections to become permanently disconnected from the power supply (until repairs can be carried out).

Figure 13 is an illustration of an alternative heater mat cycling schedule for operating the heater mats of Figures 5A and 5B.

This schedule may provide improved performance with regard to the ice bridging mentioned above. In such a sequence, the aim is to produce a travelling wave that is in effect transferring the ice across the surface. The travelling wave could move in one of a number of directions, such as substantially parallel to or substantially perpendicular to the normal airflow direction, for example, or any other angle inbetween.

Such a travelling wave advantageously allows the ice protection system to remove a build-up of refrozen melt water that may be present on the structure following a first operation of the ice protection system.

The 'travelling wave' describes a sequence of turning on (and then off) of heater mat elements to remove ice (eg refrozen water from previous cycles or a fresh build up of ice) from the structure concerned. The heater mat elements are turned on in such a sequence that ice on the structure melts and is carried away from the area on the structure by the airflow and/or the sequence of heated mats themselves.

An example travelling wave scheme starts with one heater mat element (or a number of neighbouring heater mat elements) being heated to melt build up of ice in an initial area of interest. One or more first groups of neighbouring heater mats (ie neighbouring the initial heater mat element(s)) are then heated so that the melted ice does not re-freeze as the melt water is carried away from the initial position. A second group of neighbouring heater mats, which neighbour the first group of neighbouring heater mats, are then heated so that the melted ice continues away from the initial position without re-freezing.

A controller may control a plurality of heater mats such that the heater mats are heated in a sequence where each neighbouring heater mat (in each direction from an initial heater mat) is heated in turn for example perpendicular and parallel to the direction of airflow (ie a wave travelling away in each direction from a single point). Alternatively, heater mats can be heated parallel in a direction of airflow (ie the same direction) across the surface of the structure to utilise the airflow to carry the melted ice away from the structure. Alternatively, heater mats can be heated in a direction perpendicular to the airflow.

Preferably, the neighbouring heater mats are heated in a sequence such that there is an overlap of heated mats (temporal and/or spatial), that is, there is a period when neighbouring heater mats are switched on at the same time so that melted ice does not refreeze as it crosses a boundary between areas of different heater mats.

The travelling wave may comprise a 'short' or 'long' wave. A long wave comprises a sequence of heater mats running from the initial point of interest to the edge (or near the edge) of the structure. A short wave sequence, on the other hand, may span only a few heater mats away from the region of the initial point of interest.

The short or long wave is chosen dependent on the desired de-icing performance, which enables more efficient use of and tighter control of the power, as the power can be tailored to certain regions of the structure.

In either a short or a long wave, the heater mat elements may be switched off to allow a portion of the melt water to refreeze. In some circumstances, this advantageously permits a small amount of ice to build up, which can be shed more easily (and using less power) than keeping the melt water from freezing across the span of the structure.

A variant of the short wave scheme may comprise a series or sequence of short waves, where the whole sequence of short waves may or may not traverse the whole structure. Each of the short waves are separately and independently initiated.

There are potentially other sequences and timings that could be employed to achieve the same aim.

The heater mats can also be shaped to improve performance, and two examples will now be given.

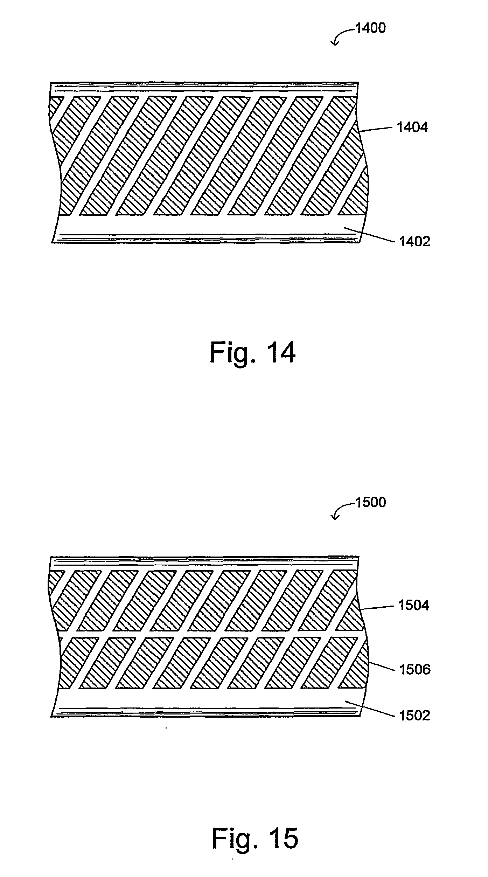

Figure 14 is an illustration of a redundant heater mat arrangement of a third embodiment.

The arrangement 1400 comprises a wing section 1402 and an overlaid series 1404 of diagonally inclined heater mats.

Figure 15 is an illustration of a redundant heater mat arrangement of a fourth embodiment.

The arrangement 1500 comprises a wing section 1502 and a first row 1504 and second row 1506 of diagonally inclined heater mats.

In the two embodiments of Figures 14 and 15, runback from the mats and/or bridging may be limited. Other angles of inclination of the mat and other shapes and sizes of mat are of course possible.

The heater mat arrangements and control system have generally been described as applicable to the leading edge of an aircraft wing, but may of course be applied to other parts of an aircraft, such as propeller blades, engine inlets, tail sections and so on. The heater mat arrangements may also be applied to other air vehicles such as helicopters (applied to the rotors, and so on) and space craft. The heater mat arrangements may also be applied to other types of vehicle (land or sea) and also to fixed structures (for example for attachment to antennae and to parts of buildings that are particularly prone to icing).

In the case of fixed structures, it may be the case that the method of design provides considerable rigidity in one direction but less in another. It may also be the case that a structure is more susceptible to twisting than to directional forces. In this case the various embodiments described above can be used to minimise the twisting (caused by high winds, for example) by disabling symmetric pairs of ice protection heaters as described above (with central support columns defining the relevant axis of symmetry, for example).

In one embodiment, the control system is able to determine a degree to which a heater element is underperforming (that is, it can detect a partial failure as well as a total failure). In the event of detecting an underperformance, the power supply to the symmetric opposite heater element can be adjusted to match the loss of power in the underperforming heater element. Alternatively, for example if partial power control is not possible or at least impractical, both heater elements in the symmetric pair can be disconnected in the event of one or both of them underperformining by any degree (to avoid any imbalance).

In another embodiment, the power supply can be more generally altered in response to detecting an underperformance of a heater element. For example, the power supply to heater elements adjacent to an underperforming heater element can be increased in order to reduce the amount of ice accretion in the vicinity of the underperforming heater element. In many circumstances, however, it may be dangerous or not possible to increase the power to heater elements beyond normal operating levels.

In a yet further embodiment, the control system may be operable to alter (for example, to reduce) the power supply to one or more heater elements that are not the symmetric opposite to an underperforming heater element. For example, if a heater element near the end of one wing is operating at half nominal power, it may be preferred to completely disconnect one or more heater elements further towards the fuselage on the other wing. This can substantially reduce any force and moment imbalances while resulting in less ice accretion overall (compared, for example, to the alternative course of action of fully disconnecting both the underperforming heater and its symmetric opposite heater on the other wing). Other courses of action are of course possible. Appropriate disconnection or power reduction strategies can be determined during preflight testing and/or simulation and stored in controller look-up tables (for example).

It will be appreciated that other types of electrically powered elements may be substituted (where applicable) for the above-described heater mats. For example the de-icing elements can comprise magnetic force pulse elements as for example described in US 4,895,322, or electro impulsive elements (where a large electrical pulse is applied to the area) as for example described in US 6,427,946 and US 6,027,075, or any combination thereof.

## Claims

1. A control system (800) for a structure (1100) including a plurality of independently controllable heater elements (802), the control system comprising:
an interface for interfacing with the heater elements (802); and
a controller (804, 806), operable
to detect an underperformance of at least one underperforming heater element; **characterized in that** the controller is operable
to control the supply of power to at least one further heater element via said interface in dependence on a stored relationship or algorithm relating said at least one further heater element to said at least one underperforming heater element.

2. A control system (800) according to Claim 1 for a structure (1100) having a desired aerodynamic performance, wherein the controller (804, 806) is operable to control the supply of power to said at least one further heater element in order to counteract a change in aerodynamic performance caused by said at least one underperforming heater element.

3. A control system (800) according to Claim 1 or 2 for a structure (1100) having an axis of symmetry, wherein a position of said at least one further heater element is substantially the reflection of a position of said at least one underperforming heater element about the axis of symmetry.

4. A control system (800) according to any preceding claim, wherein the controller is operable to reduce the supply of power to said at least one further heater element.

5. A control system (800) according to any preceding claim, wherein the controller is operable to switch the heater elements on and off so as to produce a travelling wave for transferring ice across a surface.

6. A control system (800) according to any preceding claim, comprising a plurality of controllers (804, 806), each controller being operable to control at least one of the heater elements.

7. A control system (800) according to Claim 6 for use with heater elements (802) grouped into a plurality of groups, wherein each controller is operable to control at least one group.

8. A control system (800) according to Claim 7, wherein the controllers are operable such that at least one group of heater elements is controlled by more than one of the controllers.

9. An ice protection system for a structure (1100), the ice protection system comprising:
a plurality of independently controllable heater elements (1108, 1110, 1112) arrangeable on the structure; and
a control system (800) according to claim 1.

10. An ice protection system according to Claim 9 for a structure (1100) having a desired aerodynamic performance, wherein the control system (800) is operable to control the supply of power to said at least one further heater element in order to counteract a change in aerodynamic performance caused by said at least one underperforming heater element.

11. An ice protection system according to claim 9 or claim 10, wherein the control system is operable to reduce the supply of power to said at least one further heater element.

12. An ice protection system according to any one of claims 9 to 11, wherein the heater elements are sized such that the structure can remain substantially operational despite a failure of at least two of the heater elements.

13. An ice protection system according to any one of claims 9 to 12, wherein the control system (800) is operable to switch the heater elements on and off so as to produce a travelling wave for transferring ice across a surface.

14. An ice protection system according to claim 13, wherein said control system (800) is operable to switch said heater mats on and off in sequence in a desired direction of travel from a first heater mat to a second, adjacent, heater mat away from said first heater mat to provide said travelling wave.

15. An ice protection system according to claim 14, wherein said control system (800) is operable to switch on said first and second heater mats in said sequence for an overlapping period.

16. An ice protection system according to claim 14 or 15, wherein the desired direction of travel is substantially perpendicular or parallel to a direction of air flowing over said structure.

17. An ice protection system according to any one of claims 13 to 16, wherein said control system (800) is operable to switch off said heater mats to provide a break in the travelling wave.

18. An ice protection system according to any one of claims 9 to 17. wherein the control system (800) comprises a plurality of controllers (804, 806), each controller being operable to control at least one of the heater elements.

19. An ice protection system according to Claim 18, wherein the heater elements (802) are grouped into a plurality of groups, and each controller is operable to control at least one group.

20. An ice protection system according to Claim 19, wherein at least one group of heater elements is operable to be controlled by more than one of the controllers.

21. An ice protection system according to any one of claims 9 to 20, comprising at least one breaker strip.

22. An ice protection system according to any one of claims 9 to 21, comprising at least one stagnation zone heating mat.

23. An ice protection system according to one of claims 9 to 22 arranged on said structure (1100), said structure having an axis of symmetry, wherein a position of said at least one further heater element is substantially the reflection of a position of said at least one underperforming heater element about the axis of symmetry.

24. An ice protection system according to Claim 23, wherein, during operation of the structure (1100), the axis of symmetry is substantially aligned with an average or prevailing direction of air flow relative to the structure.

25. An ice protection system according to any one of claims 9 to 24 arranged on said structure, wherein the heater elements are arranged substantially perpendicular to the leading edge of an aerodynamic member.

26. An ice protection system according to any one of claims 9 to 25 arranged on said structure, wherein the heater elements are arranged substantially diagonally in relation to the leading edge of an aerodynamic member.

27. An aircraft including an ice protection system according to any one of Claims 9 to 26.

28. An ice protection system according to claim 9, arranged on said structure (1100), wherein said structure has at least one aerodynamic member, and said heater elements are arranged in a matrix divided both substantially in line with and substantially perpendicular to the leading edge of said at least one aerodynamic member.

29. A method of controlling an ice protection system for a structure, the ice protection system including a plurality of independently controllable heater elements, and the method comprising:
detecting an underperformance of at least one underperforming heater element; **characterized in that** the method comprises
controlling the supply of power to at least one further heater element in dependence on a stored relationship or algorithm relating said at least one further heater element to said at least one underperforming heater element.

30. A method according to Claim 29 for use with a structure (1100) having a desired aerodynamic performance, further comprising controlling the supply of power to said at least one further heater element in order to counteract a change in aerodynamic performance caused by said at least one underperforming heater element.

31. A method according to Claim 29 or 30 for use with a structure (1100) having an axis of symmetry, wherein a position of said at least one further heater element is substantially the reflection of a position of said at least one underperforming heater element about the axis of symmetry.

32. A method according to any one of Claims 29 to 31, wherein the controller (800) is operable to reduce the supply of power to said at least one further heater element.

33. A method according to any one of Claims 29 to 32, further comprising switching the heater elements on and off so as to produce a travelling wave for transferring ice across a surface.

34. A method according to claim 33, comprising switching a first and second heater mat on and off in sequence in a desired direction of travel from said first heater mat to said second heater mat away from said first heater mat, said second heater mat being adjacent said first heater mat.

35. A method according to claim 34, wherein said first and second heater mats are both switched on for an overlapping period.

36. A method according to claim 34 or 35, wherein the desired direction of travel is substantially perpendicular or parallel to a direction of air flowing over said structure.

37. A method according to any one of claims 33 to 36, comprising switching off said heater mats to cause a break in the travelling wave.

38. A method of installing an ice protection system according to any one of claims 9 to 26 on said structure, said structure having a desired aerodynamic performance, the method comprising:
arranging said plurality of independently controllable heater elements on the structure; and
installing said control system on said structure.

39. A method of designing an ice protection system according to claim 9, comprising:
determining a portion of the structure to which ice protection heating is to be provided during use of the structure;
determining an extent to which the ice protection heating can fail before the structure will experience operational failure; and
designing an arrangement of said independently controllable heater elements that are sufficiently small that the failure of any heater element will not cause a failure beyond the determined extent.

40. A method according to Claim 39, further comprising:
subjecting at least the portion of the structure to icing conditions that may be expected during use of the structure;
providing ice protection heating to only part of the determined portion of the structure; and
measuring the amount of ice accretion on the structure in order to determine the extent to which the ice protection heating can fail.

41. A method according to Claim 39, further comprising modelling the amount of ice accretion on the structure in order to determine the extent to which the ice protection heating can fail.

42. A method according to any one of Claims 39 to 41, wherein the step of designing the ice protection heater system further comprises designing an arrangement of heater elements in which heater elements are arranged on either side of an axis of symmetry of the structure.

43. A method according to any one of Claims 39 to 42, further comprising installing the ice protection systems in said structure.

## Patentansprüche

1. Regelsystem (800) für eine Konstruktion (1100), das eine Vielzahl von unabhängig regelbaren Heizelementen (802) umfasst, wobei das Regelsystem aufweist:
ein Verbindungsteil für ein Zusammenschalten mit den Heizelementen (802); und
einen Regler (804, 806), der funktionsfähig ist,
um eine Minderleistung von mindestens einem eine Minderleistung erbringenden Heizelement nachzuweisen;
**dadurch gekennzeichnet, dass** der Regler funktionsfähig ist,
um die Zuführung von Strom zu mindestens einem weiteren Heizelement über das Verbindungsteil in Abhängigkeit von einer gespeicherten Beziehung oder Algorithmus mit Bezugnahme auf das mindestens eine weitere Heizelement zu dem mindestens einem eine Minderleistung erbringenden Heizelement zu regeln.

2. Regelsystem (800) nach Anspruch 1 für eine Konstruktion (1100) mit einer gewünschten aerodynamischen Leistung, bei dem der Regler (804, 806) funktionsfähig ist, um die Zuführung von Strom zu dem mindestens einen weiteren Heizelement zu regeln, um einer Veränderung bei der aerodynamischen Leistung entgegenzuwirken, die durch das mindestens eine eine Minderleistung erbringende Heizelement hervorgerufen wird.

3. Regelsystem (800) nach Anspruch 1 oder 2 für eine Konstruktion (1100) mit einer Symmetrieachse, bei dem eine Position des mindestens einen weiteren Heizelementes im Wesentlichen die Widerspiegelung einer Position des mindestens einen eine Minderleistung erbringenden Heizelementes um die Symmetrieachse ist.

4. Regelsystem (800) nach einem der vorhergehenden Ansprüche, bei dem der Regler funktionsfähig ist, um die Zuführung von Strom zu dem mindestens einen weiteren Heizelement zu reduzieren.

5. Regelsystem (800) nach einem der vorhergehenden Ansprüche, bei dem der Regler funktionsfähig ist, um die Heizelemente ein- und auszuschalten, um so eine fortschreitende Welle für das Übertragen von Eis über eine Fläche zu bewirken.

6. Regelsystem (800) nach einem der vorhergehenden Ansprüche, das eine Vielzahl von Reglern (804, 806) aufweist, wobei jeder Regler funktionsfähig ist, um mindestens eines der Heizelemente zu regeln.

7. Regelsystem (800) nach Anspruch 6 für eine Benutzung bei Heizelementen (802), die in eine Vielzahl von Gruppen eingeteilt sind, wobei ein jeder Regler funktionsfähig ist, um mindestens eine Gruppe zu regeln.

8. Regelsystem (800) nach Anspruch 7, bei dem die Regler so funktionsfähig sind, dass mindestens eine Gruppe der Heizelemente durch mehr als einen der Regler geregelt wird.

9. Eisschutzsystem für eine Konstruktion (1100), wobei das Eisschutzsystem aufweist:
eine Vielzahl von unabhängig regelbaren Heizelementen (1108, 1110, 1112), die auf der Konstruktion angeordnet werden können; und
ein Regelsystem (800) nach Anspruch 1.

10. Eisschutzsystem nach Anspruch 9 für eine Konstruktion (1100) mit einer gewünschten aerodynamischen Leistung, bei dem das Regelsystem (800) funktionsfähig ist, um die Zuführung von Strom zu dem mindestens einen weiteren Heizelement zu regeln, um einer Veränderung bei der aerodynamischen Leistung entgegenzuwirken, die durch das mindestens eine eine Minderleistung erbringende Heizelement hervorgerufen wird.

11. Eisschutzsystem nach Anspruch 9 oder Anspruch 10, bei dem das Regelsystem funktionsfähig ist, um die Zuführung von Strom zu dem mindestens einen weiteren Heizelement zu reduzieren.

12. Eisschutzsystem nach einem der Ansprüche 9 bis 11, bei dem die Heizelemente so bemessen sind, dass die Konstruktion trotz eines Ausfalls von mindestens zwei der Heizelemente im Wesentlichen funktionsfähig bleiben kann.

13. Eisschutzsystem nach einem der Ansprüche 9 bis 12, bei dem das Regelsystem (800) funktionsfähig ist, um die Heizelemente ein- und auszuschalten, um so eine fortschreitende Welle für das Übertragen von Eis über eine Fläche zu bewirken.

14. Eisschutzsystem nach Anspruch 13, bei dem das Regelsystem (800) funktionsfähig ist, um die Heizkörpermatten aufeinanderfolgend in einer gewünschten Bewegungsrichtung von einer ersten Heizkörpermatte zu einer zweiten benachbarten Heizkörpermatte weg von der ersten Heizkörpermatte ein- und auszuschalten, um die fortschreitende Welle zu bewirken.

15. Eisschutzsystem nach Anspruch 14, bei dem das Regelsystem (800) funktionsfähig ist, um die erste und zweite Heizkörpermatte aufeinanderfolgend über eine sich überschneidende Periode einzuschalten.

16. Eisschutzsystem nach Anspruch 14 oder 15, bei dem die gewünschte Bewegungsrichtung im Wesentlichen senkrecht oder parallel zu einer Richtung der Luft verläuft, die über die Konstruktion strömt.

17. Eisschutzsystem nach einem der Ansprüche 13 bis 16, bei dem das Regelsystem (800) funktionsfähig ist, um die Heizkörpermatten abzuschalten, um eine Unterbrechung der fortschreitenden Welle zu bewirken.

18. Eisschutzsystem nach einem der Ansprüche 9 bis 17, bei dem das Regelsystem (800) eine Vielzahl von Reglern (804, 806) aufweist, wobei jeder Regler funktionsfähig ist, um mindestens eines der Heizelemente zu regeln.

19. Eisschutzsystem nach Anspruch 18, bei dem die Heizelemente (802) in eine Vielzahl von Gruppen eingeteilt sind, und wobei jeder Regler funktionsfähig ist, um mindestens eine Gruppe zu regeln.

20. Eisschutzsystem nach Anspruch 19, bei dem mindestens eine Gruppe von Heizelementen funktionsfähig ist, damit sie durch mehr als einen der Regler geregelt wird.

21. Eisschutzsystem nach einem der Ansprüche 9 bis 20, das mindestens einen Unterbrecherstreifen aufweist.

22. Eisschutzsystem nach einem der Ansprüche 9 bis 21, das mindestens eine Stillstandszonenheizmatte aufweist.

23. Eisschutzsystem nach einem der Ansprüche 9 bis 22, das auf der Konstruktion (1100) angeordnet ist, wobei die Konstruktion eine Symmetrieachse aufweist, wobei eine Position des mindestens einen weiteren Heizelementes im Wesentlichen die Widerspiegelung einer Position des mindestens einen eine Minderleistung erbringenden Heizelementes um die Symmetrieachse ist.

24. Eisschutzsystem nach Anspruch 23, bei dem während des Betriebes der Konstruktion (1100) die Symmetrieachse im Wesentlichen mit einer durchschnittlichen oder vorherrschenden Richtung der Luftströmung relativ zur Konstruktion ausgerichtet ist.

25. Eisschutzsystem nach einem der Ansprüche 9 bis 24, das auf der Konstruktion angeordnet ist, wobei die Heizelemente im Wesentlichen senkrecht zur Vorderkante eines aerodynamischen Elementes angeordnet sind.

26. Eisschutzsystem nach einem der Ansprüche 9 bis 25, das auf der Konstruktion angeordnet ist, wobei die Heizelemente im Wesentlichen diagonal in Beziehung zur Vorderkante eines aerodynamischen Elementes angeordnet sind.

27. Flugzeug, das ein Eisschutzsystem nach einem der Ansprüche 9 bis 26 umfasst.

28. Eisschutzsystem nach Anspruch 9, das auf der Konstruktion (1100) angeordnet ist, wobei die Konstruktion mindestens ein aerodynamisches Element aufweist, und wobei die Heizelemente in einer Matrix angeordnet sind, die sowohl im Wesentlichen in Übereinstimmung mit der als auch im Wesentlichen senkrecht zur Vorderkante des mindestens einen aerodynamischen Elementes eingeteilt ist.

29. Verfahren zum Regeln eines Eisschutzsystems für eine Konstruktion, wobei das Eisschutzsystem eine Vielzahl von unabhängig regelbaren Heizelementen umfasst, und wobei das Verfahren die folgenden Schritte aufweist:
Nachweisen einer Minderleistung von mindestens einem eine Minderleistung erbringenden Heizelement;
**dadurch gekennzeichnet, dass** das Verfahren aufweist:
Regeln der Zuführung von Strom zu mindestens einem weiteren Heizelement in Abhängigkeit von einer gespeicherten Beziehung oder Algorithmus mit Bezugnahme auf das mindestens eine weitere Heizelement zu dem mindestens einem eine Minderleistung erbringenden Heizelement.

30. Verfahren nach Anspruch 29 für eine Anwendung bei einer Konstruktion (1100) mit einer gewünschten aerodynamischen Leistung, das außerdem den Schritt des Regelns der Zuführung von Strom zu dem mindestens einen weiteren Heizelement aufweist, um einer Veränderung bei der aerodynamischen Leistung entgegenzuwirken, die durch das mindestens eine eine Minderleistung erbringende Heizelement hervorgerufen wird.

31. Verfahren nach Anspruch 29 oder 30 für eine Anwendung bei einer Konstruktion (1100) mit einer Symmetrieachse, bei dem eine Position des mindestens einen weiteren Heizelementes im Wesentlichen die Widerspiegelung einer Position des mindestens einen eine Minderleistung erbringenden Heizelementes um die Symmetrieachse ist.

32. Verfahren nach einem der Ansprüche 29 bis 31, bei dem der Regler (800) funktionsfähig ist, um die Zuführung von Strom zu dem mindestens einen weiteren Heizelement zu reduzieren.

33. Verfahren nach einem der Ansprüche 29 bis 32, das außerdem den Schritt des Ein- und Ausschaltens der Heizelemente aufweist, um so eine fortschreitende Welle für das Übertragen von Eis über eine Fläche zu bewirken.

34. Verfahren nach Anspruch 33, das den Schritt des Ein- und Ausschaltens einer ersten und zweiten Heizkörpermatte aufeinanderfolgend in einer gewünschten Bewegungsrichtung von der ersten Heizkörpermatte zur zweiten Heizkörpermatte weg von der ersten Heizkörpermatte aufweist, wobei die zweite Heizkörpermatte der ersten Heizkörpermatte benachbart ist.

35. Verfahren nach Anspruch 34, bei dem die erste und zweite Heizkörpermatte beide über eine sich überschneidende Periode eingeschaltet werden.

36. Verfahren nach Anspruch 34 oder 35, bei dem die gewünschte Bewegungsrichtung im Wesentlichen senkrecht oder parallel zu einer Richtung der Luft verläuft, die über die Konstruktion strömt.

37. Verfahren nach einem der Ansprüche 33 bis 36, das den Schritt des Abschaltens der Heizkörpermatten aufweist, um eine Unterbrechung der fortschreitenden Welle zu bewirken.

38. Verfahren zum Installieren eines Eisschutzsystems nach einem der Ansprüche 9 bis 26 an der Konstruktion, wobei die Konstruktion eine gewünschte aerodynamische Leistung aufweist, wobei das Verfahren die folgenden Schritte aufweist:
Anordnen der Vielzahl der unabhängig regelbaren Heizelemente an der Konstruktion; und
Installieren des Regelsystems an der Konstruktion.

39. Verfahren zum Konstruieren eines Eisschutzsystems nach Anspruch 9, das die folgenden Schritte aufweist:
Ermitteln eines Abschnittes der Konstruktion, an der die Eisschutzheizung während der Benutzung der Konstruktion bereitgestellt werden soll;
Ermitteln einer Größe, bei der die Eisschutzheizung ausfallen kann, bevor die Konstruktion einen Funktionsausfall erfahren wird; und
Konstruieren einer Anordnung der unabhängig regelbaren Heizelemente, die ausreichend klein sind, damit der Ausfall eines Heizelementes nicht einen Ausfall über die ermittelte Größe hinaus bewirken wird.

40. Verfahren nach Anspruch 39, das außerdem die folgenden Schritte aufweist:
Aussetzen von mindestens dem Abschnitt der Konstruktion den Vereisungsbedingungen, die während der Benutzung der Konstruktion erwartet werden können;
Bereitstellen einer Eisschutzheizung bei nur einem Teil des ermittelten Abschnittes der Konstruktion; und
Messen des Ausmaßes der Vereisung an der Konstruktion, um die Größe zu ermitteln, bei der die Eisschutzheizung ausfallen kann.

41. Verfahren nach Anspruch 39, das außerdem den Schritt des Modellierens des Ausmaßes der Vereisung an der Konstruktion aufweist, um die Größe zu ermitteln, bei der die Eisschutzheizung ausfallen kann.

42. Verfahren nach einem der Ansprüche 39 bis 41, bei dem der Schritt des Konstruierens des Eisschutzheizsystems außerdem den Schritt des Konstruierens einer Anordnung von Heizelementen aufweist, bei der die Heizelemente auf beiden Seiten einer Symmetrieachse der Konstruktion angeordnet sind.

43. Verfahren nach einem der Ansprüche 39 bis 42, das außerdem den Schritt des Installierens des Eisschutzsystems in der Konstruktion aufweist.

## Revendications

1. Système de commande (800) pour une structure (1100) incluant une pluralité d'éléments de chauffage (802) pouvant être commandés de façon indépendante, le système de commande comprenant:
une interface pour assurer l'interface avec les éléments de chauffage (802); et
un dispositif de commande (804, 806), pouvant fonctionner
pour détecter une sous-performance d'au moins un élément de chauffage fonctionnant mal;
**caractérisé par le fait que** le dispositif de commande peut fonctionner
pour commander l'alimentation en énergie d'au moins un élément de chauffage supplémentaire par le biais de ladite interface en fonction d'une relation ou d'un algorithme stocké/e établissant une relation entre ledit au moins un élément de chauffage supplémentaire et ledit au moins un élément de chauffage fonctionnant mal.

2. Système de commande (800) selon la revendication 1 pour une structure (1100) ayant une performance aérodynamique voulue, dans lequel le dispositif de commande (804, 806) peut fonctionner pour commander l'alimentation en énergie dudit au moins un élément de chauffage supplémentaire afin de neutraliser un changement de performance aérodynamique provoqué par ledit au moins un élément de chauffage fonctionnant mal.

3. Système de commande (800) selon la revendication 1 ou 2 pour une structure (1100) ayant un axe de symétrie, dans lequel une position dudit au moins un élément de chauffage supplémentaire est essentiellement la réflexion d'une position dudit au moins un élément de chauffage fonctionnant mal par rapport à l'axe de symétrie.

4. Système de commande (800) selon l'une quelconque des revendications précédentes, dans lequel le dispositif de commande peut fonctionner pour réduire l'alimentation en énergie dudit au moins un élément de chauffage supplémentaire.

5. Système de commande (800) selon l'une quelconque des revendications précédentes, dans lequel le dispositif de commande peut fonctionner pour mettre sous tension et hors tension les éléments de chauffage de manière à produire une onde mobile pour transférer le givre d'un endroit à un autre d'une surface.

6. Système de commande (800) selon l'une quelconque des revendications précédentes, comprenant une pluralité de dispositifs de commande (804, 806), chaque dispositif de commande pouvant fonctionner pour commander au moins un des éléments de chauffage.

7. Système de commande (800) selon la revendication 6, destiné à être utilisé avec des éléments de chauffage (802) regroupés en plusieurs groupes, dans lequel chaque dispositif de commande peut fonctionner pour commander au moins un groupe.

8. Système de commande (800) selon la revendication 7, dans lequel les dispositifs de commande peuvent fonctionner de manière à ce qu'au moins un groupe d'éléments de chauffage soit commandé par plus d'un dispositif de commande.

9. Système de protection antigivre pour une structure (1100), le système de protection antigivre comprenant:
une pluralité d'éléments de chauffage (1108, 1110, 1112) pouvant être commandés de façon indépendante agencés sur la structure; et
un système de commande (800) selon la revendication 1.

10. Système de protection antigivre selon la revendication 9 pour une structure (1100) ayant une performance aérodynamique voulue, dans lequel le système de commande (800) peut fonctionner pour commander l'alimentation en énergie dudit au moins un élément de chauffage supplémentaire afin de neutraliser un changement de performance aérodynamique provoqué par ledit au moins un élément de chauffage fonctionnant mal.

11. Système de protection antigivre selon la revendication 9 ou la revendication 10, dans lequel le système de commande peut fonctionner pour réduire l'alimentation en énergie dudit au moins un élément de chauffage supplémentaire.

12. Système de protection antigivre selon l'une quelconque des revendications 9 à 11, dans lequel les éléments de chauffage sont dimensionnés de manière à ce que la structure puisse demeurer essentiellement opérationnelle malgré une défaillance d'au moins deux des éléments de chauffage.

13. Système de protection antigivre selon l'une quelconque des revendications 9 à 12, dans lequel le système de commande (800) peut fonctionner pour mettre sous tension et hors tension les éléments de chauffage de manière à produire une onde mobile pour transférer le givre d'un endroit à un autre d'une surface.

14. Système de protection antigivre selon la revendication 13, dans lequel ledit système de commande (800) peut fonctionner pour mettre sous tension et hors tension lesdites nappes chauffantes dans l'ordre dans une direction de déplacement voulue allant d'une première nappe chauffante vers une seconde nappe chauffante adjacente, en s'éloignant de ladite première nappe chauffante pour fournir ladite onde mobile.

15. Système de protection antigivre selon la revendication 14, dans lequel ledit système de commande (800) peut fonctionner pour mettre sous tension lesdites première et seconde nappes chauffantes suivant ledit ordre pendant une période de superposition.

16. Système de protection antigivre selon la revendication 14 ou 15, dans lequel la direction de déplacement voulue est essentiellement perpendiculaire ou parallèle à une direction d'écoulement d'air sur ladite structure.

17. Système de protection antigivre selon l'une quelconque des revendications 13 à 16, dans lequel ledit système de commande (800) peut fonctionner pour mettre hors tension lesdites nappes chauffantes pour provoquer une interruption de l'onde mobile.

18. Système de protection antigivre selon l'une quelconque des revendications 9 à 17, dans lequel le système de commande (800) comprend une pluralité de dispositifs de commande (804, 806), chaque dispositif de commande pouvant fonctionner pour commander au moins un des éléments de chauffage.

19. Système de protection antigivre selon la revendication 18, dans lequel les éléments de chauffage (802) sont regroupés en plusieurs groupes, et chaque dispositif de commande peut fonctionner pour commander au moins un groupe.

20. Système de protection antigivre selon la revendication 19, dans lequel au moins un groupe d'éléments de chauffage peut fonctionner pour être commandé par plus d'un des dispositifs de commande.

21. Système de protection antigivre selon l'une quelconque des revendications 9 à 20, comprenant au moins un rupteur.

22. Système de protection antigivre selon l'une quelconque des revendications 9 à 21, comprenant au moins une nappe chauffante de zone de stagnation.

23. Système de protection antigivre selon l'une quelconque des revendications 9 à 22 disposé sur ladite structure (1100), ladite structure ayant un axe de symétrie, dans lequel une position dudit au moins un élément de chauffage supplémentaire est essentiellement la réflexion d'une position dudit au moins un élément de chauffage fonctionnant mal par rapport à l'axe de symétrie.

24. Système de protection antigivre selon la revendication 23, dans lequel, pendant le fonctionnement de la structure (1100), l'axe de symétrie est essentiellement aligné avec une direction moyenne ou dominante de l'écoulement d'air par rapport à la structure.

25. Système de protection antigivre selon l'une quelconque des revendications 9 à 24 disposé sur ladite structure, dans lequel les éléments de chauffage sont agencés de manière essentiellement perpendiculaire au bord d'attaque d'un élément aérodynamique.

26. Système de protection antigivre selon l'une quelconque des revendications 9 à 25 disposé sur ladite structure, dans lequel les éléments de chauffage sont agencés de manière essentiellement diagonale par rapport au bord d'attaque d'un élément aérodynamique.

27. Aéronef incluant un système de protection antigivre selon l'une quelconque des revendications 9 à 26.

28. Système de protection antigivre selon la revendication 9 disposé sur ladite structure (1100), dans lequel ladite structure comprend au moins un élément aérodynamique et lesdits éléments de chauffage sont disposés en matrice divisée en rangées à la fois essentiellement alignées et essentiellement perpendiculaires avec le bord d'attaque dudit au moins un élément aérodynamique.

29. Procédé de commande d'un système de protection antigivre pour une structure, le système de protection antigivre incluant une pluralité d'éléments de chauffage pouvant être commandés de façon indépendante, et le procédé comprenant:
la détection d'une sous-performance d'au moins un élément de chauffage fonctionnant mal;
**caractérisé par le fait que** le procédé comprend
la commande de l'alimentation en énergie d'au moins un élément de chauffage supplémentaire en fonction d'une relation ou d'un algorithme stocké/e établissant une relation entre ledit au moins un élément de chauffage supplémentaire et ledit au moins un élément de chauffage fonctionnant mal.

30. Procédé selon la revendication 29, destiné à être utilisé avec une structure (1100) ayant une performance aérodynamique voulue, comprenant, en outre, la commande de l'alimentation en énergie dudit au moins un élément de chauffage supplémentaire afin de neutraliser un changement de performance aérodynamique provoqué par ledit au moins un élément de chauffage fonctionnant mal.

31. Procédé selon la revendication 29 ou 30, destiné à être utilisé avec une structure (1100) ayant un axe de symétrie, dans lequel une position dudit au moins un élément de chauffage supplémentaire est essentiellement la réflexion d'une position dudit au moins un élément de chauffage fonctionnant mal par rapport à l'axe de symétrie.

32. Procédé selon l'une quelconque des revendications 29 à 31, dans lequel le dispositif de commande (800) peut fonctionner pour réduire l'alimentation en énergie dudit au moins un élément de chauffage supplémentaire.

33. Procédé selon l'une quelconque des revendications 29 à 32, comprenant, en outre, la mise sous tension et hors tension des éléments de chauffage de manière à produire une onde mobile pour transférer le givre d'un endroit à un autre d'une surface.

34. Procédé selon la revendication 33, comprenant la mise sous tension et hors tension d'une première et d'une seconde nappes chauffantes dans l'ordre dans une direction de déplacement voulue allant de ladite première nappe chauffante vers ladite seconde nappe chauffante, en s'éloignant de ladite première nappe chauffante, ladite seconde nappe chauffante étant adjacente à ladite première nappe chauffante.

35. Procédé selon la revendication 34, dans lequel lesdites première et seconde nappes chauffantes sont toutes les deux mises sous tension pendant une période de superposition.

36. Procédé selon la revendication 34 ou 35, dans lequel la direction de déplacement voulue est essentiellement perpendiculaire ou parallèle à une direction d'écoulement d'air sur ladite structure.

37. Procédé selon l'une quelconque des revendications 33 à 36, comprenant la mise hors tension desdites nappes chauffantes pour provoquer une interruption de l'onde mobile.

38. Procédé d'installation d'un système de protection antigivre selon l'une quelconque des revendications 9 à 26 sur ladite structure, ladite structure ayant une performance aérodynamique voulue, le procédé comprenant:
la disposition de ladite pluralité d'éléments de chauffage pouvant être commandés de façon indépendante sur la structure; et
l'installation dudit système de commande sur ladite structure.

39. Procédé de conception d'un système de protection antigivre selon la revendication 9, comprenant:
la détermination d'une portion de la structure qui devra bénéficier d'un chauffage de protection antigivre pendant l'utilisation de la structure;
la détermination d'un degré de défaillance pouvant être atteint par le chauffage de protection antigivre avant que la structure subisse une défaillance opérationnelle; et
la conception d'un agencement desdits éléments de chauffage pouvant être commandés de façon indépendante, qui sont suffisamment petits pour que la défaillance d'un élément de chauffage quelconque ne provoque pas de défaillance au-delà du degré déterminé.

40. Procédé selon la revendication 39, comprenant, en outre:
le fait de soumettre au moins à la portion de la structure à des conditions de givrage susceptibles d'être les conditions rencontrées pendant l'utilisation de la structure;
la fourniture d'un chauffage de protection antigivre uniquement sur une partie de la portion déterminée de la structure; et
la mesure de la quantité d'accrétion de givre sur la structure pour déterminer le degré possible de défaillance du chauffage de protection antigivre.

41. Procédé selon la revendication 39, comprenant, en outre, une modélisation de la quantité d'accrétion de givre sur la structure pour déterminer le degré possible de défaillance du chauffage de protection antigivre.

42. Procédé selon l'une quelconque des revendications 39 à 41, dans lequel l'étape de conception du système de chauffage de protection antigivre comprend, en outre, la conception d'un agencement des éléments de chauffage dans lequel les éléments de chauffage sont disposés sur les deux côtés d'un axe de symétrie de la structure.

43. Procédé selon l'une quelconque des revendications 39 à 42, comprenant, en outre, l'installation du système de protection antigivre dans ladite structure.
